Europäisches Patentamt

European Patent Office

Office européen des brevets

(19)

(11) **EP 1 099 052 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(51) Int Cl.$^7$: **F02D 41/30**

(86) Internationale Anmeldenummer:
**PCT/DE99/01725**

(21) Anmeldenummer: **99938185.8**

(22) Anmeldetag: **12.06.1999**

(87) Internationale Veröffentlichungsnummer:
**WO 99/067524 (29.12.1999 Gazette 1999/52)**

(54) **VERFAHREN ZUM BETREIBEN EINER BRENNKRAFTMASCHINE**

METHOD FOR OPERATING AN INTERNAL COMBUSTION ENGINE

PROCEDE DE FONCTIONNEMENT D'UN MOTEUR A COMBUSTION INTERNE

(84) Benannte Vertragsstaaten:
**DE FR IT**

(30) Priorität: **24.06.1998 DE 19828035**

(43) Veröffentlichungstag der Anmeldung:
**16.05.2001 Patentblatt 2001/20**

(73) Patentinhaber: **ROBERT BOSCH GMBH**
**70442 Stuttgart (DE)**

(72) Erfinder:
• **BAUER, Hartmut**
**D-70839 Gerlingen (DE)**
• **VOLZ, Dieter**
**D-74080 Heilbronn (DE)**

(56) Entgegenhaltungen:
**EP-A2- 0 889 218      US-A- 4 955 339**
**US-A- 5 333 583      US-A- 5 722 362**

## Beschreibung

Stand der Technik

Die Erfindung betrifft ein Verfahren zum Betreiben einer Brennkraftmaschine insbesondere eines Kraftfahrzeugs, bei dem Kraftstoff entweder in einer ersten Betriebsart während einer Verdichtungsphase oder in einer zweiten Betriebsart während einer Ansaugphase direkt in einen Brennraum eingespritzt wird, bei dem zwischen den beiden Betriebsarten umgeschaltet wird, und bei dem die die eingespritzte Kraftstoffmasse beeinflussende Einspritzdauer in den beiden Betriebsarten unterschiedlich gesteuert und/oder geregelt werden. Des weiteren betrifft die Erfindung eine Brennkraftmaschine insbesondere für ein Kraftfahrzeug, mit einem Einspritzventil, mit dem Kraftstoff entweder in einer ersten Betriebsart während einer Verdichtungsphase oder in einer zweiten Betriebsart während einer Ansaugphase direkt in einen Brennraum einspritzbar ist, und mit einem Steuergerät zur Umschaltung zwischen den beiden Betriebsarten und zur unterschiedlichen Steuerung und/oder Regelung der die eingespritzte Kraftstoffmasse beeinflussenden Einspritzdauer in den beiden Betriebsarten.

Derartige Systeme zur direkten Einspritzung von Kraftstoff in den Brennraum einer Brennkraftmaschine sind allgemein bekannt. Es wird dabei als erste Betriebsart ein sogenannter Schichtladungsbetrieb und als zweite Betriebsart ein sogenannter Homogenbetrieb unterschieden. Der Schichtladungsbetrieb wird insbesondere bei kleineren Lasten verwendet, während der Homogenbetrieb bei größeren, an der Brennkraftmaschine anliegenden Lasten zur Anwendung kommt.

Im Schichtladungsbetrieb wird der Kraftstoff während der Verdichtungsphase der Brennkraftmaschine in den Brennraum derart eingespritzt, daß sich im Zeitpunkt der Zündung eine Kraftstoffwolke in unmittelbarer Umgebung einer Zündkerze befindet. Diese Einspritzung kann auf unterschiedliche Weise erfolgen. So ist es möglich, daß die eingespritzte Kraftstoffwolke sich bereits während bzw. unmittelbar nach der Einspritzung bei der Zündkerze befindet und von dieser entzündet wird. Ebenfalls ist es möglich, daß die eingespritzte Kraftstoffwolke durch eine Ladungsbewegung zu der Zündkerze geführt und dann erst entzündet wird. Bei beiden Brennverfahren liegt keine gleichmäßige Kraftstoffverteilung vor, sondern eine Schichtladung.

Der Vorteil des Schichtladungsbetriebs liegt darin, daß dort mit einer sehr geringen Kraftstoffmenge die anliegenden kleineren Lasten von der Brennkraftmaschine ausgeführt werden können. Größere Lasten können allerdings nicht durch den Schichtladungsbetrieb erfüllt werden.

Im für derartige größere Lasten vorgesehenen Homogenbetrieb wird der Kraftstoff während der Ansaugphase der Brennkraftmaschine eingespritzt, so daß eine Verwirbelung und damit eine Verteilung des Kraftstoffs in dem Brennraum noch ohne weiteres erfolgen kann. Insoweit entspricht der Homogenbetrieb etwa der Betriebsweise von Brennkraftmaschinen, bei denen in herkömmlicher Weise Kraftstoff in das Ansaugrohr eingespritzt wird. Bei Bedarf kann auch bei kleineren Lasten der Homogenbetrieb eingesetzt werden.

Im Schichtladungsbetrieb wird die Drosselklappe in dem zu dem Brennraum führenden Ansaugrohr weit geöffnet und die Verbrennung wird im wesentlichen nur durch die einzuspritzende Kraftstoffmasse gesteuert und/oder geregelt. Im Homogenbetrieb wird die Drosselklappe in Abhängigkeit von dem angeforderten Moment geöffnet bzw. geschlossen und die einzuspritzende Kraftstoffmasse wird in Abhängigkeit von der angesaugten Luftmasse gesteuert und/oder geregelt.

In beiden Betriebsarten, also im Schichtladungsbetrieb und im Homogenbetrieb, wird die einzuspritzende Kraftstoffmasse in Abhängigkeit zusätzlich von einer Mehrzahl weiterer Betriebsgrößen auf einen im Hinblick auf Kraftstoffeinsparung, Abgasreduzierung und dergleichen optimalen Wert gesteuert und/oder geregelt. Die Steuerung und/oder Regelung ist dabei in den beiden Betriebsarten unterschiedlich.

Bei der Steuerung und/oder Regelung derartiger direkteinspritzender Brennkraftmaschinen muß gewährleistet werden, daß bei der Umschaltung insbesondere von dem Schichtladungsbetrieb in den Homogenbetrieb das von der Brennkraftmaschine abgegebene Moment konstant bleibt.

Aufgabe der Erfindung ist es, ein Verfahren zum Betreiben einer Brennkraftmaschine zu schaffen, das eine momentenkonstante Umschaltung von der ersten in die zweite Betriebsart ermöglicht.

Diese Aufgabe wird erfindungsgemäß durch ein Verfahren gemäß Anspruch 1 gelöst. Bei einer Brennkraftmaschine wird die Aufgabe erfindungsgemäß gemäß Anspruch 5 gelöst.

Auf diese Weise ist es möglich, das durch das Umschalten von dem Schichtladungsbetrieb in den Homogenbetrieb hervorgerufene instationäre Verhalten des Saugrohrdrucks der Brennkraftmaschine zu kompensieren. Durch die Funktion kann die Einspritzdauer derart verändert werden, daß das genannten instationäre Verhalten ausgeglichen wird. Durch die Erfindung wird damit erreicht, daß das abgegebene Moment der Brennkraftmaschine beim Umschalten im wesentlichen konstant bleibt.

Besonders vorteilhaft ist es, wenn die Funktion aus einer Simulations- bzw. Modellrechnung ermittelt wird. Damit wird bereits ein im wesentlichen konstantes Moment bei dem Umschalten von dem Schichtladungsbetrieb in den Homogenbetrieb erreicht.

Bei einer besonders vorteilhaften Weiterbildung der Erfindung wird die Funktion in Abhängigkeit von einer oder mehreren Betriebsgrößen der Brennkraftmaschine verändert. Damit kann die Konstanz des abgegebenen Moments bei der Umschaltung von dem Schichtladungsbetrieb in den Homogenbetrieb weiter verbessert werden.

Bei einer vorteilhaften Weiterbildung der Erfindung wird die Funktion in einem zeitlichen Bereich vorgegeben, in dem eine Erhöhung der an sich für die zweite Betriebsart vorgesehenen Einspritzdauer erforderlich ist, um das abgegebene Moment der Brennkraftmaschine konstant zu halten. Die Funktion ist also nur in demjenigen zeitlichen Bereich wirksam, in dem eine Korrektur bzw. Kompensation des von der Brennkraftmaschine abgegebenen Moments erforderlich ist. Ansonsten kommt die Funktion nicht zur Wirkung.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

Figur 1    zeigt ein schematisches Blockschaltbild eines Ausführungsbeispiels einer erfindungsgemäßen Brennkraftmaschine eines Kraftfahrzeugs,

Figur 2a   zeigt ein schematisches Zeitdiagramm der Einspritzungen und Zündungen der einzelnen Zylinder der Brennkraftmaschine der Figur 1 bei der Umschaltung von der ersten in die zweite Betriebsart,

Figur 2b   zeigt ein schematisches Zeitdiagramm von Signalen zur Steuerung und/oder Regelung der Brennkraftmaschine der Figur 1 bei der Umschaltung von der ersten in die zweite Betriebsart,

Figur 3a   zeigt ein schematisches Zeitdiagramm der Einspritzungen und Zündungen der einzelnen Zylinder der Brennkraftmaschine der Figur 1 bei einer ersten Alternative der Umschaltung von der zweiten in die erste Betriebsart,

Figur 3b   zeigt ein schematisches Zeitdiagramm von Signalen zur Steuerung und/oder Regelung der Brennkraftmaschine der Figur 1 bei einer ersten Alternative der Umschaltung von der zweiten in die erste Betriebsart,

Figur 4a   zeigt ein schematisches Zeitdiagramm der Einspritzungen und Zündungen der einzelnen Zylinder der Brennkraftmaschine der Figur 1 bei einer zweiten Alternative der Umschaltung von der zweiten in die erste Betriebsart,

Figur 4b   zeigt ein schematisches Zeitdiagramm von Signalen zur Steuerung und/oder Regelung der Brennkraftmaschine der Figur 1 bei einer zweiten Alternative der Umschaltung von der zweiten in die erste Betriebsart,

Figur 5a   zeigt ein schematisches Ablaufdiagramm der Initialisierung der Steuerung für die Umschaltung der Brennkraftmaschine der Figur 1 von der ersten in die zweite Betriebsart gemäß den Figuren 2a und 2b,

Figur 5b   zeigt ein schematisches Ablaufdiagramm der Steuerung der Umschaltung der Brennkraftmaschine der Figur 1 von der ersten in die zweite Betriebsart gemäß den Figuren 2a und 2b,

Figur 6    zeigt eine schematisches Ablaufdiagramm der Steuerung der Drosselklappe der Brennkraftmaschine der Figur 1 von der ersten in die zweite Betriebsart gemäß den Figuren 2a und 2b,

Figur 7a   zeigt ein schematisches Ablaufdiagramm der Steuerung und/oder Regelung von Betriebsgrößen der Brennkraftmaschine der Figur 1 von der ersten in die zweite Betriebsart gemäß den Figuren 2a und 2b, und

Figur 7b   zeigt zwei schematische Zeitdigramme von Betriebsgrößen der Figur 7a.

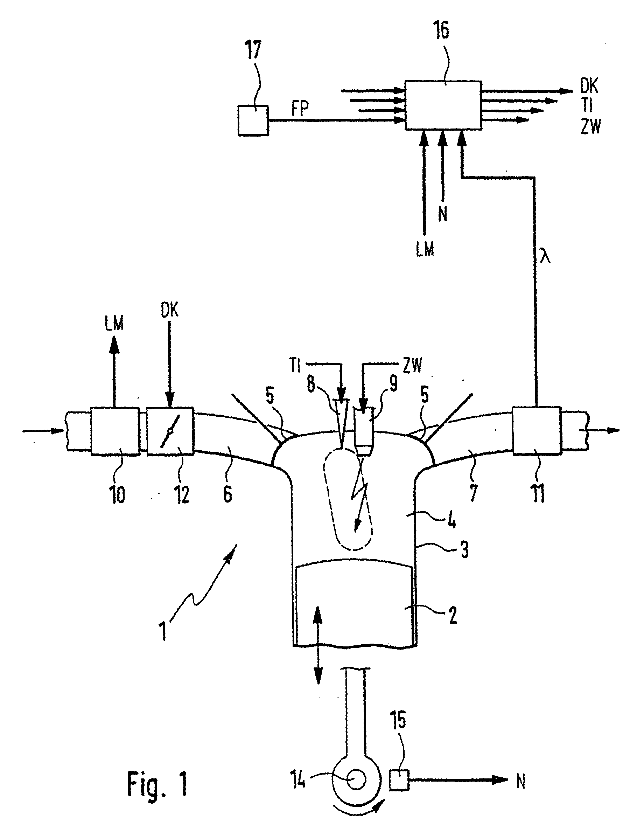

In der Figur 1 ist eine Brennkraftmaschine 1 dargestellt, bei der ein Kolben 2 in einem Zylinder 3 hin- und herbewegbar ist. Der Zylinder 3 ist mit einem Brennraum 4 versehen, an den über Ventile 5 ein Ansaugrohr 6 und ein Abgasrohr 7 angeschlossen sind. Des weiteren sind dem Brennraum 4 ein mit einem Signal TI ansteuerbares Einspritzventil 8 und eine mit einem Signal ZW ansteuerbare Zündkerze 9 zugeordnet.

Das Ansaugrohr 6 ist mit einem Luftmassensensor 10 und das Abgasrohr 7 kann mit einem Lambda-Sensor 11 versehen sein. Der Luftmassensensor 10 mißt die Luftmasse der dem Ansaugrohr 6 zugeführten Frischluft und erzeugt in Abhängigkeit davon ein Signal LM. Der Lambda-Sensor 11 mißt den Sauerstoffgehalt des Abgases in dem Abgasrohr 7 und erzeugt in Abhängigkeit davon ein Signal $\lambda$.

In dem Ansaugrohr 6 ist eine Drosselklappe 12 untergebracht, deren Drehstellung mittels eines Signals DK einstellbar ist.

In einer ersten Betriebsart, dem Schichtladungsbetrieb der Brennkraftmaschine 1, wird die Drosselklappe 12 weit geöffnet. Der Kraftstoff wird von dem Einspritzventil 8 während einer durch den Kolben 2 hervorgerufenen Verdichtungsphase in den Brennraum 4 eingespritzt, und zwar örtlich in die unmittelbare Umgebung der Zündkerze 9 sowie zeitlich in geeignetem Abstand vor dem Zündzeitpunkt. Dann wird mit Hilfe der Zündkerze 9 der Kraftstoff entzündet, so daß der Kolben 2 in der nunmehr folgenden Arbeitsphase durch die Ausdehnung des entzündeten Kraftstoffs angetrieben wird.

In einer zweiten Betriebsart, dem Homogenbetrieb der Brennkraftmaschine 1, wird die Drosselklappe 12 in Abhängigkeit von der erwünschten, zugeführten Luftmasse teilweise geöffnet bzw. geschlossen. Der Kraftstoff wird von dem Einspritzventil 8 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit in dem Brennraum 4 im wesentlichen gleichmäßig verteilt. Danach wird das Kraftstoff/Luft-Gemisch während der Verdichtungsphase verdichtet, um dann von der Zündkerze 9 entzündet zu werden. Durch die Ausdehnung des entzündeten Kraftstoffs wird der Kolben 2 angetrieben.

Im Schichtladungsbetrieb wie auch im Homogenbetrieb wird durch den angetriebenen Kolben eine Kurbelwelle 14 in eine Drehbewegung versetzt, über die letztendlich die Räder des Kraftfahrzeugs angetrieben werden. Der Kurbelwelle 14 ist ein Drehzahlsensor 15 zugeordnet, der in Abhängigkeit von der Drehbewegung der Kurbelwelle 14 ein Signal N erzeugt.

Die im Schichtladungsbetrieb und im Homogenbetrieb von dem Einspritzventil 8 in den Brennraum 4 eingespritzte Kraftstoffmasse wird von einem Steuergerät 16 insbesondere im Hinblick auf einen geringen Kraftstoffverbrauch und/oder eine geringe Schadstoffentwicklung gesteuert und/oder geregelt. Zu diesem Zweck ist das Steuergerät 16 mit einem Mikroprozessor versehen, der in einem Speichermedium, insbesondere in einem Read-Only-Memory ein Programm abgespeichert hat, das dazu geeignet ist, die genannte Steuerung und/oder Regelung durchzuführen.

Das Steuergerät 16 ist von Eingangssignalen beaufschlagt, die mittels Sensoren gemessene Betriebsgrößen der Brennkraftmaschine darstellen. Beispielsweise ist das Steuergerät 16 mit dem Luftmassensensor 10, dem Lambda-Sensor 11 und dem Drehzahlsensor 15 verbunden. Des weiteren ist das Steuergerät 16 mit einem Fahrpedalsensor 17 verbunden, der ein Signal FP erzeugt, das die Stellung eines von einem Fahrer betätigbaren Fahrpedals und damit das von dem Fahrer angeforderte Moment angibt. Das Steuergerät 16 erzeugt Ausgangssignale, mit denen über Aktoren das Verhalten der Brennkraftmaschine entsprechend der erwünschten Steuerung und/oder Regelung beeinflußt werden kann. Beispielsweise ist das Steuergerät 16 mit dem Einspritzventil 8, der Zündkerze 9 und der Drosselklappe 12 verbunden und erzeugt die zu deren Ansteuerung erforderlichen Signale TI, ZW und DK.

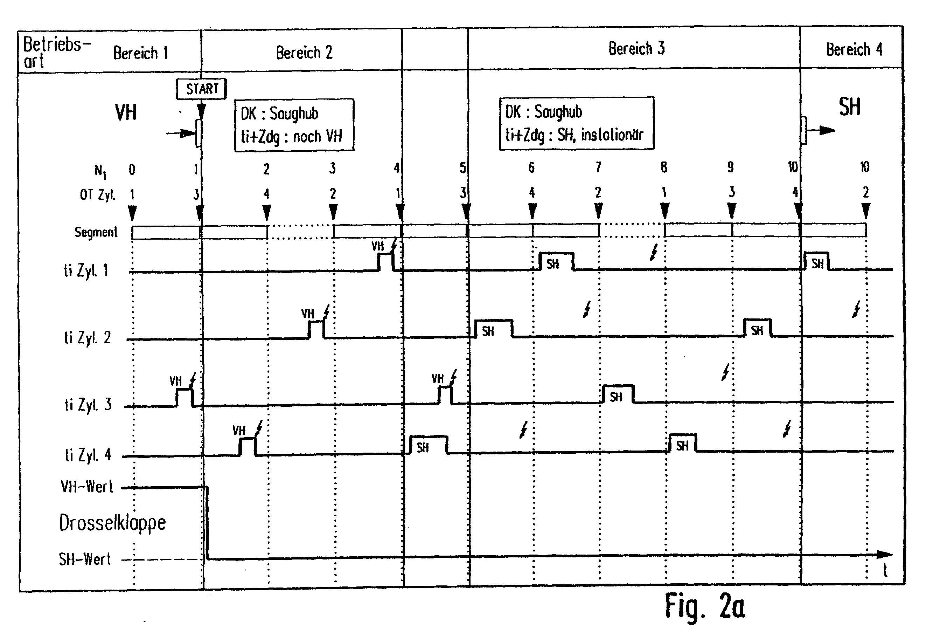

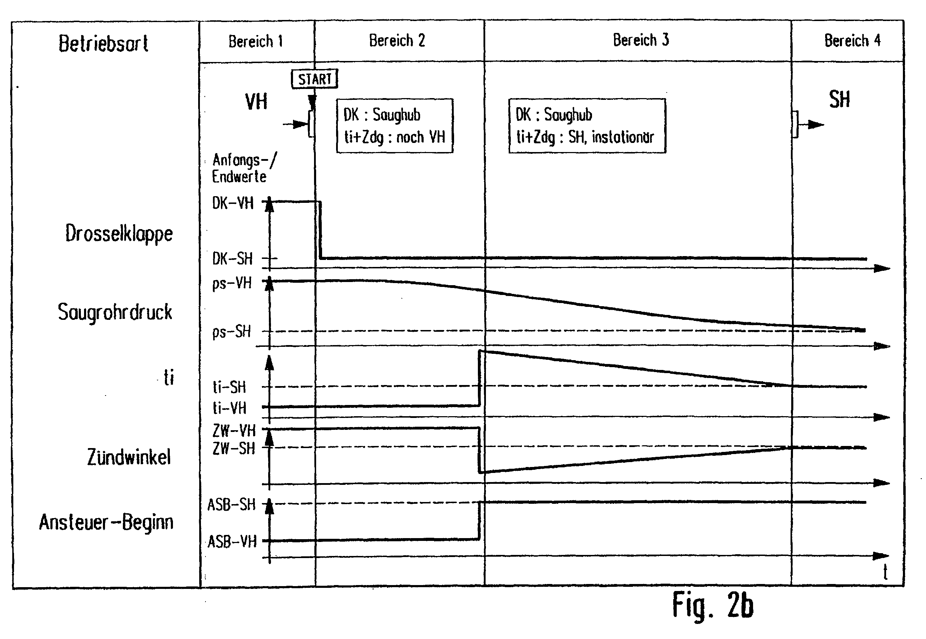

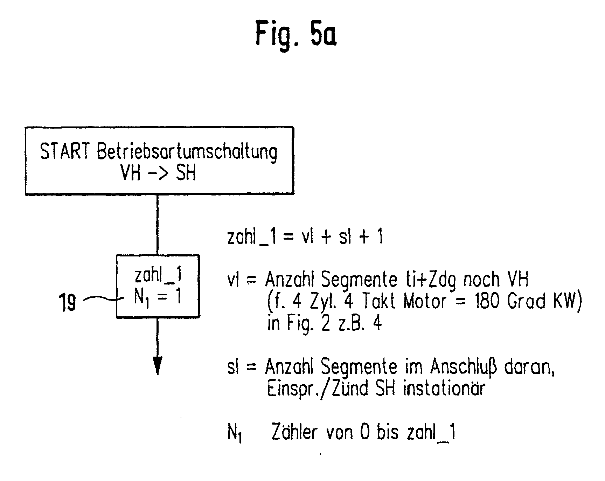

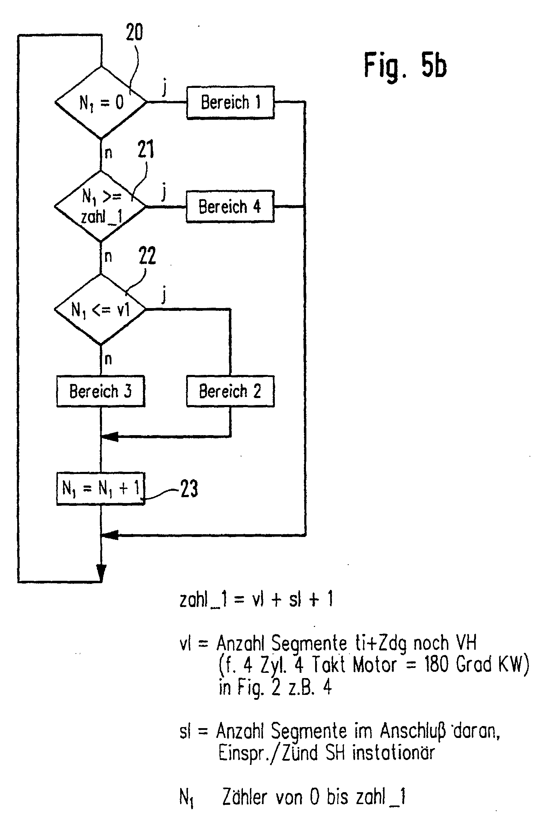

Von dem Steuergerät 16 wird das nachfolgend anhand der Figuren 2 sowie 5 bis 7 beschriebene Verfahren zum Umschalten von einem Schichtladungsbetrieb in einen Homogenbetrieb durchgeführt. Die in den Figuren 5 bis 7 gezeigten Blöcke stellen dabei Funktionen des Verfahrens dar, die beispielsweise in der Form von Softwaremodulen oder dergleichen in dem Steuergerät 16 realisiert sind.

In den Figuren 2a und 2b ist die Umschaltung von dem Schichtladungsbetrieb in den Homogenbetrieb in der Form zweier Zeitdiagramme dargestellt, in denen verschiedene Betriebsgrößen der Brennkraftmaschine 1 aufgetragen sind. In den Figuren 2a und 2b und auch in den übrigen Figuren ist der Schichtladungsbetrieb, also die erste Betriebsart, als Verdichtungshubeinspritzung VH und der Homogenbetrieb, also die zweite Betriebsart, als Saughubeinspritzung SH bezeichnet.

In den Figuren 2a und 2b sind vier Bereiche unterschieden. Im Bereich 1 werden die Betriebsgrößen der Brennkraftmaschine 1 nach einem Standard-VH-Verfahren ermittelt und beeinflußt. Der Bereich 1 stellt den normalen Schichtladungsbetrieb dar. Der Saugrohrdruck ps weist im Bereich 1 den Standard-VH-Wert ps-VH auf.

Mit dem Bereich 2 startet die eigentliche Umschaltung von VH nach SH. Mit dem Start der Umschaltung wird die Drosselklappe DK 12 von einem Standard-VH-Wert DK-VH auf einen Standard-SH-Wert DK-SH umgestellt. Insbesondere wird die Drosselklappe 12 aus ihrem geöffneten Zustand im Schichtladungsbetrieb auf einen gedrosselten Zustand im Homogenbetrieb umgestellt. Im Bereich 2 wird die Einspritzung von Kraftstoff und die Zündung des Kraftstoffs noch nicht verändert. Dies bedeutet, daß der Ansteuerbeginn ASB für die Einspritzung, die Einspritzdauer ti und der Zündwinkel ZW noch entsprechend den Standard-VH-Werten ASB-VH, ti-VH, ZW-VH vorgegeben werden. Aus der Figur 2b ist jedoch ersichtlich, daß in dem Bereich 2 aufgrund der gedrosselten Stellung der Drosselklappe 12 sich der Saugrohrdruck ps langsam verringert.

Nach einer vorgegebenen Zeitdauer und/oder entsprechend einer vorgegebenen Simulations- bzw. Modellrechnung und/oder in Abhängigkeit von dem Saugrohrdruck ps und/oder in Abhängigkeit von anderen Betriebsgrößen der Brennkraftmaschine 1 wird danach von dem Bereich 2 zu dem Bereich 3 übergegangen. Verallgemeinert kann die Umschaltung von dem Bereich 2 in den Bereich 3 durch eine oder mehrere der folgenden Bedingungen beeinflusst werden: zeitgesteuert, winkelgesteuert, also z.B. durch eine Anzahl von Umdrehungen, Schwellwert einer Betriebsgröße, z. B. Saugrohrdruck oder Luftmasse, von Betriebsgrößen abgeleitete Ersatzgrößen, z.B. indizierter Mitteldruck oder indiziertes Moment, Drehzahlschwellwert.

Während gemäß der Figur 2a im Bereich 2 der Kraftstoff noch während des Verdichtungshubs in den Brennraum 4 eingespritzt wird, wird im Bereich 3 der Kraftstoff während des Saughubs in den Brennraum 4 eingespritzt. Dazwischen befindet sich ein Übergangssegment, in dem der Zylinder 3 noch während des Verdichtungshubs eingespritzt und gezündet wird, während bei dem Zylinder 4 in den Saughub eingespritzt und in dem nachfolgenden Verdichtungshub entzündet wird.

Bei dem Übergang von dem Bereich 2 zu dem Bereich 3 wird der Ansteuerbeginn ASB für die Einspritzung von Kraftstoff sprungartig auf einen Standard-SH-Wert ASB-SH verändert. Die Einspritzdauer ti wird sprungartig auf einen Wert erhöht, der größer ist als ein Standard-SH-Wert ti-SH. Der Zündwinkel ZW wird sprungartig auf einen Wert verändert, der später ist als ein Standard-SH-Wert ZW-SH. Die Stellung der Drosselklappe 12 entspricht dem ständig berechneten Standard-SH-Wert DK-SH.

Im Bereich 3 verändern sich die Einspritzdauer ti und der Zündwinkel ZW etwa gleichartig wie der Saugrohrdruck ps. Die Einspritzdauer ti und der Zündwinkel ZW nähern sich dabei den jeweiligen Standard-SH-Werten langsam an. Dieser Bereich 3 stellt einen instationären Homogenbetrieb dar. Wenn der Saugrohrdruck ps und/oder andere Betriebsgrößen der Brennkraftmaschine 1 die an sich zu dem Homogenbetrieb zugehörigen Werte, also ps-SH erreicht hat bzw. haben, so wird in den Bereich 4 übergegangen. Dieser Übergang kann auch nach einer vorgegebenen Zeitdauer und/oder entsprechend einer Simulations- bzw. Modellrechnung erfolgen.

Der Bereich 4 stellt den normalen Homogenbetrieb dar, in dem die Betriebsgrößen der Brennkraftmaschine 1 nach Standard-SH-Werten ermittelt und beeinflußt werden.

In der Figur 5a wird ein Verfahren initialisiert, mit dem die einzelnen Bereiche 1 bis 4 der Figuren 2a und 2b erkannt und voneinander unterschieden werden können.

Es wird in einem Block 19 eine zahl_1 ermittelt, die abhängig ist von der Anzahl der Segmente v1, in denen die Einspritzdauer ti und der Zündwinkel ZW im Bereich 2 noch auf den Standard-VH-Werten sind, von der Anzahl der Segmente s1, in denen die Einspritzdauer ti und der Zündwinkel ZW im Bereich 3 instationär sind, und von einem zusätzlichen Segment. Es gilt: zahl_1 = v1 + s1 + 1.

Dann wird in dem Block 19 ein Zähler N1 auf den Wert N1 = 1 gesetzt. Der Zähler N1 ist dazu vorgesehen, von diesem Wert "1" auf den Wert der zahl_1 hochzuzählen.

Entsprechend einem Block 20 der Figur 5b wird die Brennkraftmaschine 1 in dem Bereich 1, also im Schichtladungsbetrieb betrieben, solange N1 = 0 ist. Der Zähler N1 wird nicht inkrementiert. Erst wenn der Zähler N1 durch den Block 19 der Figur 5a auf den Wert N1 = 1 gesetzt wird, wird ein nachfolgender Block 21 erreicht.

Ist entsprechend dem Block 21 N1 größer oder gleich der zahl_1, so wird die Brennkraftmaschine 1 entsprechend dem Bereich 4 und damit im Homogenbetrieb betrieben. Der Zähler N1 wird nicht inkrementiert. Erst wenn der Zähler N1 beispielsweise während der Durchführung eines späteren Schichtladungsbetriebs wieder auf N1 = 0 gesetzt wird, wird der Bereich 1 wieder erreicht.

Ist N1 weder "0" noch größer als die zahl_1, so wird in einem Block 22 geprüft, ob N1 kleiner oder gleich v1 ist. Ist dies der Fall, so wird die Brennkraftmaschine 1 entsprechend dem Bereich 2, also mit gedrosselter Drosselklappe 12, aber ansonsten mit Standard-VH-Werten betrieben. Ist dies hingegen nicht der Fall, so wird die Brennkraftmaschine 1 entsprechend dem Bereich 3, also dem instationären Homogenbetrieb betrieben. In beiden Fällen wird das Verfahren mit einem Block 23 fortgesetzt.

In dem Block 23 wird der Zähler N1 nach Ablauf eines Segments bzw. eines Arbeitsspiels der Brennkraftmaschine 1 inkrementiert. Das beschriebene Verfahren der Figur 5b wird danach für den neuen Wert des Zählers N1 erneut durchlaufen. Dies wird fortgesetzt, bis der Zähler N1 = zahl_1 erreicht hat. Dann wird wie beschrieben in den Bereich 4 übergegangen.

Insgesamt ist es damit mittels der Verfahren nach den Figuren 5a und 5b möglich, die einzelnen Bereiche bzw. Übergangssegmente der Figuren 2a und 2b zu erkennen und voneinander zu unterscheiden. Entsprechend dem beschriebenen Verfahren wird in Abhängigkeit von den Segmenten bzw. Arbeitsspielen der Brennkraftmaschine 1 in die einzelnen Bereiche geschaltet und die Brennkraftmaschine 1 entsprechend den einzelnen Bereichen beeinflußt.

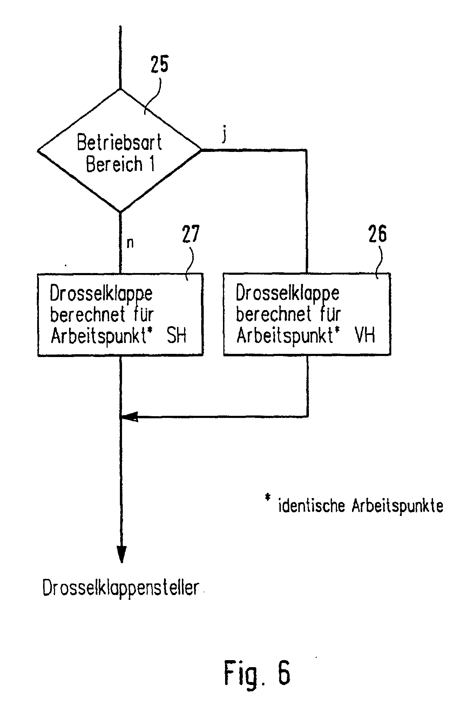

In der Figur 6 wird in einem Block 25 ermittelt, ob der Bereich 1 vorliegt. Dies erfolgt auf der Grundlage des Verfahrens nach den Figuren 5a und 5b. Liegt der Bereich 1 vor, so wird in einem Block 26 die Stellung der Drosselklappe 12 für einen bestimmten Arbeitspunkt im Schichtladungsbetriebs, also in der Verdichtungshubeinspritzung VH ermittelt und eingestellt. Ist dies jedoch nicht der Fall, so wird in einem Block 27 die Stellung der Drosselklappe 12 für denselben bestimmten Arbeitspunkt im Homogenbetreib, also in der Saughubeinspritzung SH ermittelt und eingestellt.

Dies entspricht der mit den Figuren 2a und 2b beschriebenen Einstellung der Drosselklappe 12 im Bereich 1 auf den Standard-VH-Wert DK-VH, der eine im wesentlichen geöffnete Stellung der Drosselklappe 12 darstellt, während in den sonstigen Bereichen 2 bis 4 die Drosselklappe 12 auf den genannten Standard-SH-Wert DK-SH eingestellt wird, der eine gedrosselte Stellung darstellt.

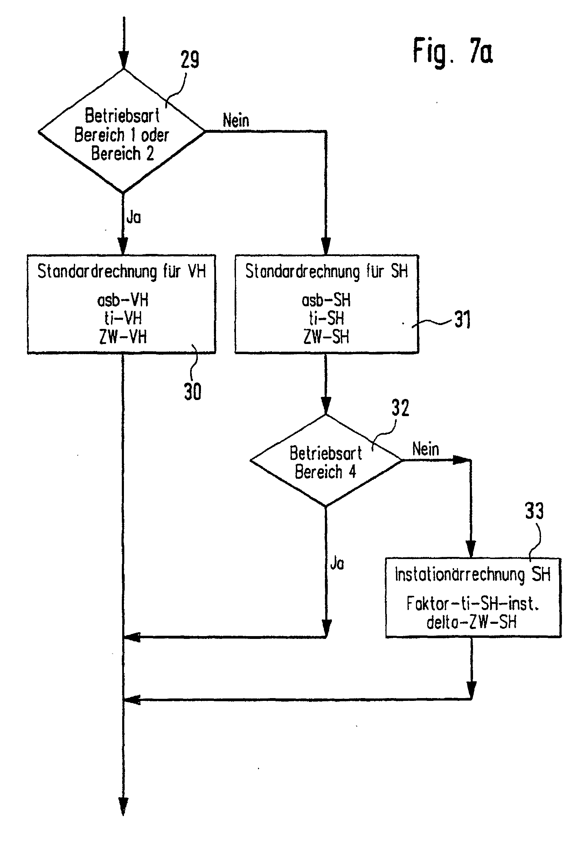

In der Figur 7a wird in einem Block 29 nach dem Verfahren der Figuren 5a und 5b ermittelt, ob der Bereich 1 oder der Bereich 2 vorliegt. Ist dies der Fall, so werden in einem Block 30 die Standard-VH-Werte ermittelt und es wird die Brennkraftmaschine 1 entsprechend beeinflußt. Bei diesen Standard-VH-Werten handelt es sich um die bei den Figuren 2a und 2b bereits erläuterten Standard-VH-Werte für den Ansteuerbeginn ASB-VH, die Einspritzdauer ti-VH und den Zündwinkel ZW-VH.

Liegt weder der Bereich 1, noch der Bereich 2 vor, so werden in einem Block 31 die Standard-SH-Werte ermittelt. Bei diesen Standard-SH-Werten handelt es sich um den bei den Figuren 2a und 2b bereits erläuterten Standard-SH-Wert für den Ansteuerbeginn ASB-SH. Des weiteren handelt es sich um die Standard-SH-Werte für die Einspritzdauer ti-SH und den Zündwinkel ZW-SH.

In einem nachfolgenden Block 32 wird geprüft, ob der Bereich 4 vorliegt. Ist dies der Fall, so liegt der Bereich 4 vor. In diesem Bereich 4 werden die Betriebsgrößen der Brennkraftmaschine 1 entsprechend dem Homogenbetrieb eingestellt, es werden also die Standardwerte ti-SH und ZW-SH unmittelbar verwendet.

Liegt der Bereich 4 jedoch nicht vor, liegt also der instationäre Homogenbetrieb des Bereichs 3 der Brennkraftmaschine 1 vor, so wird in einem Block 33 eine Instationärrechnung durchgeführt.

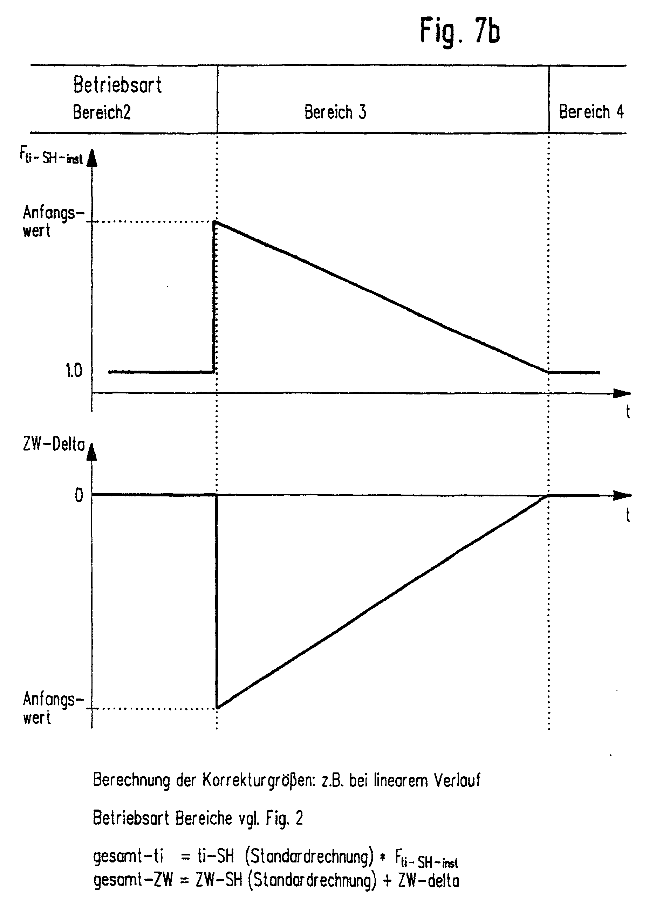

Bei dieser Instationärrechnung werden entsprechend der Figur 7b eine Funktion $P_{ti-SH-inst}$ und eine Funktion ZW-Delta ermittelt. Der Verlauf beider Funktionen kann wie dargestellt linear oder auch kurvenförmg sein. Beide Funktionen starten bei dem Übergang von dem Bereich 2 zu dem Bereich 3 von einem Anfangswert, der größer ist als der Wert "1". Bei der Funktion $F_{ti-SH-inst}$ ist der Anfangswert positiv, während bei der Funktion ZW-Delta der Anfangswert negativ ist. Bei der Funktion $F_{ti-SH-inst}$ endet die Funktion bei dem Übergang von dem Bereich 3 zu dem Bereich 4 mit dem Wert "1", während die Funktion ZW-Delta mit dem Wert "0" endet.

Die Funktion $F_{ti-SH-inst}$ und/oder die Funktion ZW-Delta können fest vorgegeben sein. Die Funktionen können dabei durch vorherige oder gleichzeitige Simulations- und/oder Modellrechnungen ermittelt worden sein bzw. ermittelt werden. Alternativ oder zusätzlich ist es möglich, daß die Funktion $F_{ti-SH-inst}$ und/oder die Funktion ZW-Delta in Abhängigkeit von einer oder mehreren Betriebsgrößen der Brennkraftmaschine 1 ermittelt werden oder zumindest davon abhängig sind.

Die Funktion $F_{ti-SH-inst}$ bzw. die Funktion ZW-Delta werden mit den jeweils zugehörigen Standard-SH-Werten multiplikativ bzw. additiv verknüpft.

Die Einspritzdauer ti im Bereich 3 ergibt sich damit zu:

$$\text{ti-gesamt} = \text{ti-SH} * F_{ti-SH-inst}.$$

Der Zündwinkel ZW im Bereich 3 ergibt sich damit zu:

$$\text{ZW-gesamt} = \text{ZW-SH} + \text{ZW-Delta}.$$

Auf diese Weise ergibt sich aus dem Standart-SH-Wert ti-SH der in der Figur 2b dargestellte Verlauf der Einspritzdauer ti im Bereich 3. Entsprechend ergibt sich aus dem Standard-SH-Wert ZW-SH der in der Figur 2b dargestellte Verlauf des Zündwinkels ZW im Bereich 3.

Insbesondere durch die sich aus der Funktion $F_{ti-SH-inst}$ ergebende und in der Figur 2b dargestellte Erhöhung der Einspritzdauer ti würde eine Erhöhung des von der Brennkraftmaschine erzeugten und abgegebenen Moments erreicht. Diese Erhöhung der Kraftstoffmasse ist notwendig, um ein definiertes, homogenes, zündfähiges Gemisch zu erreichen. Durch die Spätverstellung der Zündung wird erreicht, daß insgesamt ein im wesentlichen konstantes Moment bei der Umschaltung von dem Schichtladungsbetrieb VH in den Homogenbetrieb SH beibehalten wird.

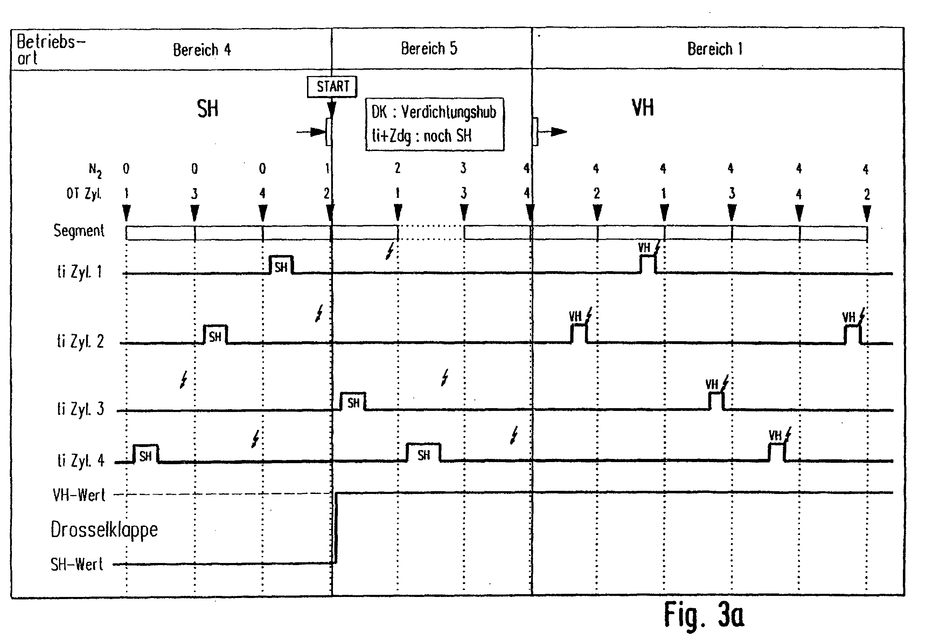

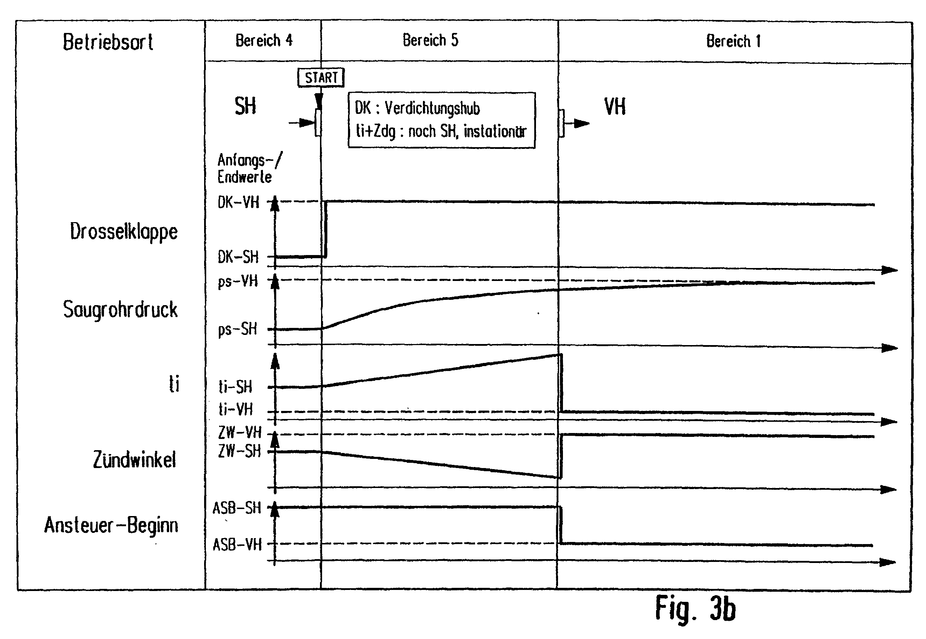

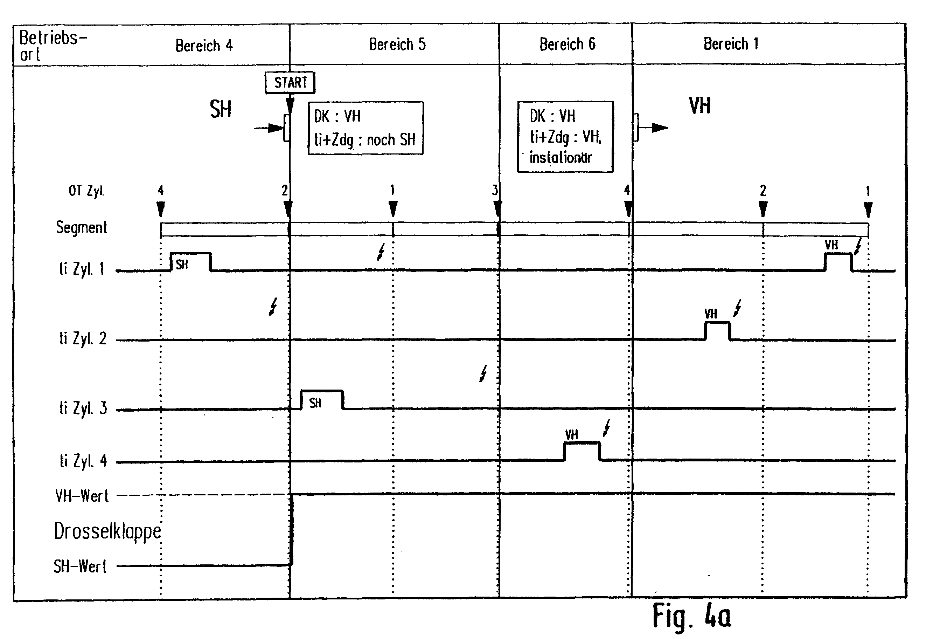

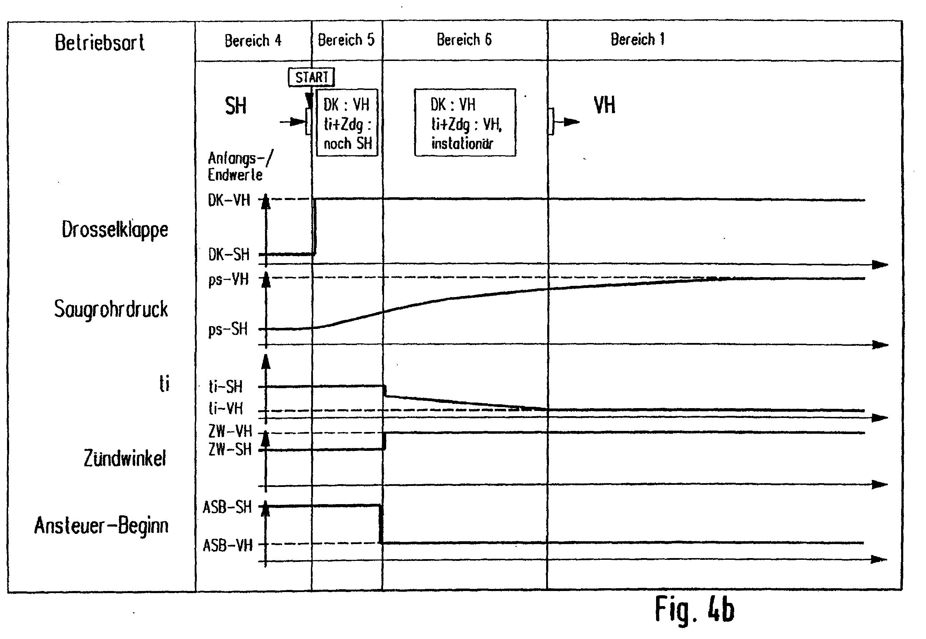

In den Figuren 3a und 3b sowie in den Figuren 4a und 4b ist die Umschaltung von dem Homogenbetrieb in den Schichtladungsbetrieb in der Form jeweils zweier Zeitdiagramme dargestellt, in denen verschiedene Betriebsgrößen der Brennkraftmaschine 1 aufgetragen sind. Die Figuren 3a und 3b sowie 4a und 4b entsprechen in ihrem Aufbau im wesentlichen den Figuren 2a und 2b, auf die insoweit verwiesen wird.

In den Figuren 3a und 3b sowie in den Figuren 4a und 4b sind zwei Alternativen einer Umschaltung von dem Homgenbetrieb in den Schichtladungsbetrieb, also von SH nach VH dargestellt. Bei der ersten Alternative nach den Figuren 3a und 3b stellt der Bereich 4 den Homogenbetrieb SH und der Bereich 1 den Schichtladungsbetrieb VH dar, während im dazwischenliegenden Bereich 5 die Umschaltung erfolgt. In der zweiten Alternative nach den Figuren 4a und 4b stellt der Bereich 4 ebenfalls den Homogenbetrieb SH und der Bereich 1 den Schichtladungsbetrieb VH dar, während dazwischen die beiden Bereiche 5 und 6 der Umschaltung dienen.

Bei beiden Alternativen wird die Brennkraftmaschine 1 in dem Bereich 4 mit den Standard-SH-Werten für den Homogenbetrieb betrieben. Entsprechend wird die Brennkraftmaschine 1 bei beiden Alternativen in dem Bereich 1 mit den Standard-VH-Werten für den Schichtladungsbetrieb betrieben.

Bei beiden Alternativen startet die Umschaltung mit dem Ende des Bereichs 4 und endet die Umschaltung mit dem Beginn des Bereichs 1. Bei beiden Alternativen wird die Drosselklappe 12 mit dem Ende des Bereichs 4, also mit dem Ende des Homogenbetriebs von dem Standardwert DK-SH auf den Standardwert DK-VH sprungartig umgestellt.

Bei der ersten Alternative der Figuren 3a und 3b wird der Ansteuerbeginn für die Einspritzung von Kraftstoff in den Brennraum 4 mit dem Beginn des Bereichs 1 von dem Standardwert ASB-SH auf den Standardwert ASB-VH sprungartig umgestellt. Während des Bereichs 5 wird der Zündwinkel ZW von dem Standardwert ZW-SH mit der Zeit nach spät verstellt, um sich dann im Übergang zu dem Bereich 1 sprungartig auf den Standardwert ZW-VH zu verändern. Die Einspritzdauer ti steigt ausgehend von dem Standardwert ti-SH während des Bereichs 5 mit der Zeit an, um dann im Übergang zu dem Bereich 1 sich sprungartig auf den Standardwert ti-VH zu verringern.

Bei der zweiten Alternative nach den Figuren 4a und 4b wird der Ansteuerbeginn für die Einspritzung von Kraftstoff beim Übergang von dem Bereich 5 zu dem Bereich 6 sprungartig von dem Standardwert ASB-SH auf den Standardwert ASB-VH verringert. Der Zündwinkel ZW und die Einspritzdauer ti werden während des Bereichs 5 noch auf den Standardwerten ZW-SH und ti-SH gehalten. Beim Übergang von dem Bereich 5 zu dem Bereich 6 wird der Zündwinkel von dem Standardwert ZW-SH sprungartig auf den Standardwert ZW-VH verändert. Die Einspritzdauer ti wird vie dem Übergang von dem Bereich 5 zu dem Bereich 6 zuerst sprungartig auf einen Wert erniedrigt, der kleiner ist als der Standardwert ti-SH, der aber noch größer ist als der Standardwert ti-VH. Dann wird die Einspritzdauer von diesem Wert mit der Zeit innerhalb des Bereichs 6 auf den Standardwert ti-VH erniedrigt.

Durch die in den Figuren 3a und 3b sowie 4a und 4b dargestellten Verfahren wird eine Umschaltung von dem Homogenbetrieb in den Schichtladungsbetrieb erreicht, bei der das von der Brennkraftmaschine 1 erzeugte und abgegebene Moment im wesentlichen konstant bleibt.

### Patentansprüche

1. Verfahren zum Betreiben einer Brennkraftmaschine (1) insbesondere eines Kraftfahrzeugs, bei dem Kraftstoff entweder in einer ersten Betriebsart (VH) während einer Verdichtungsphase oder in einer zweiten Betriebsart (SH) während einer Ansaugphase direkt in einen Brennraum (4) eingespritzt wird, bei dem zwischen den beiden Betriebsarten (VH, SH) umgeschaltet wird, und bei dem die die eingespritzte Kraftstoffmasse beeinflussende Einspritzdauer (ti) in den beiden Betriebsarten (VH, SH) unterschiedlich gesteuert und/oder geregelt werden, **dadurch gekennzeichnet, daß** bei dem Umschalten von der ersten Betriebsart (VH) in die zweite Betriebsart (SH) die Einspritzdauer (ti) durch eine Funktion ($F_{ti-SH-inst}$) beeinflußt wird, die von einem positiven Anfangswert, der größer ist als der Wert "1", auf einen Endwert "1" verläuft, wobei die Funktion ($F_{ti-SH-inst}$) multiplikativ mit der an sich für die zweite Betriebsart (SH) vorgesehene Einspritzdauer (ti-SH) verknüpft wird.

2. Verfahren nach Anspruch 1, **dadurch gekennzeichnet, daß** die Funktion ($F_{ti-SH-inst}$) aus einer Simulations- bzw. Modellrechnung ermittelt wird.

3. Verfahren nach einem der Ansprüche 1 oder 2, **dadurch gekennzeichnet, daß** die Funktion ($F_{ti-SH-inst}$) in Abhängigkeit von einer oder mehreren Betriebsgrößen der Brennkraftmaschine (1) verändert wird.

4. Verfahren nach einem der Ansprüche 1 bis 4, **dadurch gekennzeichnet, daß** die Funktion ($F_{ti-SH-inst}$) in einem zeitlichen Bereich (Bereich 3) vorgegeben wird, in dem eine Erhöhung der an sich für die zweite Betriebsart (SH) vorgesehenen Einspritzdauer (ti-SH) erforderlich ist, um das abgegebene Moment der Brennkraftmaschine (1) konstant zu halten.

5. Brennkraftmaschine (1) insbesondere für ein Kraftfahrzeug, mit einem Einspritzventil (8), mit dem Kraftstoff entweder in einer ersten Betriebsart (VH) während einer Verdichtungsphase oder in einer zweiten Betriebsart (SH) während einer Ansaugphase direkt in einen Brennraum (4) eingespritzt wird, und mit einem Steuergerät (16) zur Umschaltung zwischen den beiden Betriebsarten (VH, SH) und zur unterschiedlichen Steuerung und/oder Regelung der die eingespritzte Kraftstoffmasse beeinflussenden Einspritzdauer (ti) in den beiden Betriebsarten (VH, SH), **dadurch gekennzeichnet, daß** durch das Steuergerät (16) bei dem Umschalten von der ersten Betriebsart (VH) in die zweite Betriebsart (SH) die an sich für die zweite Betriebsart (SH) vorgesehene Einspritzdauer (ti-SH) durch eine Funktion ($F_{ti-SH-inst}$) multiplikativ beeinflußt wird, die von einem positiven Anfangswert, der größer ist als der Wert "1", auf einen Endwert "1" verläuft.

### Claims

1. Method for operating an internal combustion engine, in particular of a motor vehicle, in which fuel is injected directly into a combustion chamber (4) either in a first operating mode (VH) during a compression phase or in a second operating mode (SH) during an induction phase, in which the engine is switched between the two operating modes (VH, SH), and in which the injection time (ti), which influences the mass of fuel which is injected, is controlled differently in the two operating modes (VH, SH), **characterized. in that**, when the engine is switched from the first operating mode (VH) to the second operating mode (SH), the injection time (ti) is influenced by a function ($F_{ti-SH-inst}$) which runs from a positive starting value, which is greater than the value "1", to an end value "1", the function ($F_{ti-SH-inst}$) being linked by multiplication to the injection time (ti-SH) which is provided for the second operating mode (SH).

2. Method according to Claim 1, **characterized in that** the function ($F_{ti-SH-inst}$) is determined from a simulation or model calculation.

3. Method according to one of Claims 1 or 2, **characterized in that** the function ($F_{ti-SH-inst}$) is changed as a function of one or more operating variables of the internal combustion engine (1).

4. Method according to one of Claims 1 to 3, **characterized in that** the function ($F_{ti-SH-inst}$) is predetermined in a time range (range 3) in which an increase in the injection time (ti-SH) which is inherently provided for the second operating mode (SH) is required in order to keep the torque output by the internal combustion engine (1) constant.

5. Internal combustion engine (1), in particular for a motor vehicle, having an injection valve (8), by means of which fuel is injected directly into a combustion chamber (4) either in a first operating mode (VH) during a compression phase or in a second operating mode (SH) during an induction phase, and having a control unit (16) for switching between the two operating modes (VH, SH) and for differently controlling the injection time (ti) which influences the mass of fuel which is injected in the two operating modes (VH, SH), **characterized in that** when the engine is switched from the first operating mode (VH) to the second operating mode (SH), the control.unit (16) is used to influence the injection time (ti-SH), which is inherently provided for the second operating mode (SH), by multiplication using a function ($F_{ti-SH-inst}$) which runs from a positive starting value, which is greater than the value "1", to an end value "1".

**Revendications**

1. Procédé de mise en oeuvre d'un moteur à combustion interne (1), notamment pour un véhicule automobile selon lequel le carburant est injecté directement soit selon un premier mode de fonctionnement (VH) pendant une phase de compression, soit selon un second mode de fonctionnement (SH) pendant une phase d'aspiration, selon lequel on commute entre les deux modes de fonctionnement (VH, SH) et selon lequel on commande et/ou on régule différemment la durée d'injection (ti) influençant la masse de carburant injectée dans les deux modes de fonctionnement (VH, SH),
   **caractérisé en ce qu'**
   en commutant du premier mode de fonctionnement (VH) dans le second mode de fonctionnement (SH), on influence la durée d'injection (ti) par une fonction ($F_{ti-SH-inst}$) qui passe d'une valeur initiale positive supérieure à la valeur « 1 » à une valeur finale « 1 », la fonction ($F_{ti-SH-inst}$) étant combinée de manière multiplicative à la durée d'injection (ti-SH) prévue pour le second mode de fonctionnement (SH).

2. Procédé selon la revendication 1,
   **caractérisé en ce qu'**
   on détermine la fonction ($F_{ti-SH-inst}$) à partir d'un calcul de simulation ou d'un calcul effectué sur un modèle.

3. Procédé selon l'une quelconque des revendications 1 ou 2,
   **caractérisé en ce qu'**
   on modifie la fonction ($F_{ti-SH-inst}$), selon un ou plusieurs paramètres de fonctionnement du moteur à combustion interne (1).

4. Procédé selon l'une quelconque des revendications 1 à 3,
   **caractérisé en ce qu'**
   on prédétermine la fonction ($F_{ti-SH-inst}$) dans une plage de temps (plage 3) dans laquelle il faut une augmentation de la durée d'injection (ti-SH), prévue pour le second mode de fonctionnement (SH), pour maintenir constant le couple fourni par le moteur à combustion interne (1).

5. Moteur à combustion interne (1), notamment pour un véhicule automobile comprenant un injecteur (8) qui injecte directement le carburant dans la chambre de combustion (4) soit dans un premier mode de fonctionnement (VH) pendant une phase de compression soit dans un second mode de fonctionnement (SH) pendant une phase d'aspiration, et un appareil de commande (16) pour commuter entre les deux modes de fonctionnement (VH, SH) et pour commander et/ou réguler différemment la durée d'injection (ti) qui influence la masse de carburant injectée dans les deux modes de fonctionnement (VH, SH),
   **caractérisé en ce que**
   l'appareil de commande (16) en commutant du premier mode de fonctionnement (VH) dans le second mode de fonctionnement (SH), influence de manière multiplicative la durée d'injection (ti-SH) prévue pour le second mode de fonctionnement (SH) par une fonction ($F_{ti-SH-inst}$) qui passe d'une valeur initiale positive supérieure à la valeur « 1 » à une valeur finale « 1 ».

Fig. 1

Fig. 2a

| Betriebsart | Bereich 1 | Bereich 2 | Bereich 3 | Bereich 4 |
|---|---|---|---|---|

VH

START

SH

DK : Saughub
ti+Zdg : noch VH

DK : Saughub
ti+Zdg : SH, instationär

Anfangs-/
Endwerte

**Drosselklappe**

DK–VH

DK–SH

**Saugrohrdruck**

ps–VH

ps–SH

**ti**

ti–SH
ti–VH

**Zündwinkel**

ZW–VH
ZW–SH

**Ansteuer–Beginn**

ASB–SH

ASB–VH

t

## Fig. 2b

EP 1 099 052 B1

Fig. 3a

EP 1 099 052 B1

| Betriebsart | Bereich 4 | Bereich 5 | Bereich 1 |
|---|---|---|---|

SH → [START] → VH

DK : Verdichtungshub
ti+Zdg : noch SH, instationär

Anfangs-/Endwerte

Drosselklappe

DK-VH

DK-SH

Saugrohrdruck

ps-VH

ps-SH

ti

ti-SH

ti-VH

Zündwinkel

ZW-VH
ZW-SH

Ansteuer-Beginn

ASB-SH

ASB-VH

Fig. 3b

EP 1 099 052 B1

Fig. 4a

| Betriebsart | Bereich 4 | Bereich 5 | Bereich 6 | Bereich 1 |
|---|---|---|---|---|

SH | | | | VH

START

DK : VH
ti+Zdg :
noch SH

DK : VH
ti+Zdg : VH,
instationär

Anfangs-/Endwerte

Drosselklappe — DK-VH, DK-SH

Saugrohrdruck — ps-VH, ps-SH

ti — ti-SH, ti-VH

Zündwinkel — ZW-VH, ZW-SH

Ansteuer-Beginn — ASB-SH, ASB-VH

Fig. 4b

# Fig. 5a

START Betriebsartumschaltung
VH -> SH

zahl_1 = vl + sl + 1

zahl_1
N$_1$ = 1

19

vl = Anzahl Segmente ti+Zdg noch VH
(f. 4 Zyl. 4 Takt Motor = 180 Grad KW)
in Fig. 2 z.B. 4

sl = Anzahl Segmente im Anschluß daran,
Einspr./Zünd SH instationär

N$_1$    Zähler von 0 bis zahl_1

# Fig. 5b

```
        20
         ╱╲
        ╱  ╲      j
       ╱ N₁=0 ╲──────  Bereich 1  ────┐
        ╲    ╱                        │
         ╲  ╱                         │
          ╲╱                          │
          │ n     21                  │
         ╱╲                           │
        ╱  ╲      j                   │
       ╱ N₁ >= ╲─────  Bereich 4  ────┤
       ╲ zahl_1╱                      │
        ╲    ╱                        │
         ╲  ╱                         │
          ╲╱                          │
          │ n     22                  │
         ╱╲                           │
        ╱  ╲      j                   │
       ╱N₁<=vl╲──────────┐            │
        ╲    ╱           │            │
         ╲  ╱            │            │
          ╲╱             │            │
          │ n            │            │
    ┌──────────┐   ┌──────────┐       │
    │ Bereich 3│   │ Bereich 2│       │
    └──────────┘   └──────────┘       │
         │              │             │
         │◄─────────────┘             │
    ┌──────────┐                      │
    │ N₁ = N₁ + 1 │────23             │
    └──────────┘                      │
         │◄───────────────────────────┘
```

$$zahl\_1 = vl + sl + 1$$

$vl$ = Anzahl Segmente ti+Zdg noch VH
(f. 4 Zyl. 4 Takt Motor = 180 Grad KW)
in Fig. 2 z.B. 4

$sl$ = Anzahl Segmente im Anschluß daran,
Einspr./Zünd SH instationär

$N_1$    Zähler von 0 bis zahl_1

25

Betriebsart
Bereich 1

j

n

27

Drosselklappe
berechnet für
Arbeitspunkt* SH

26

Drosselklappe
berechnet für
Arbeitspunkt* VH

* identische Arbeitspunkte

Drosselklappensteller

Fig. 6

# Fig. 7a

**29** — Betriebsart Bereich 1 oder Bereich 2 — Ja / Nein

**30** — Standardrechnung für VH
asb-VH
ti-VH
ZW-VH

**31** — Standardrechnung für SH
asb-SH
ti-SH
ZW-SH

**32** — Betriebsart Bereich 4 — Ja / Nein

**33** — Instationärrechnung SH
Faktor-ti-SH-inst.
delta-ZW-SH

# Fig. 7b

| Betriebsart Bereich2 | Bereich 3 | Bereich 4 |
|---|---|---|

Berechnung der Korrekturgrößen: z.B. bei linearem Verlauf

Betriebsart Bereiche vgl. Fig. 2

$$\text{gesamt-ti} = \text{ti-SH (Standardrechnung)} * F_{ti-SH-inst}$$
$$\text{gesamt-ZW} = \text{ZW-SH (Standardrechnung)} + \text{ZW-delta}$$